(19) Europäisches Patentamt
European Patent Office
Office européen des brevets

(11) EP 0 695 772 B1

(12) **EUROPEAN PATENT SPECIFICATION**

(45) Date of publication and mention of the grant of the patent:
**01.12.1999 Bulletin 1999/48**

(51) Int Cl.$^6$: **C08G 18/50**, C04B 41/48

(21) Application number: **95111659.9**

(22) Date of filing: **25.07.1995**

(54) **Process for the coating and protection of stony surfaces**

Verfahren zum Überziehen und Schutz von Steinoberflächen

Procédé de revêtement et protection de surfaces de pierre

(84) Designated Contracting States:
**AT BE CH DE DK ES FR GB GR IE IT LI NL PT SE**

(30) Priority: **26.07.1994 IT MI941584**

(43) Date of publication of application:
**07.02.1996 Bulletin 1996/06**

(73) Proprietor: **AUSIMONT S.p.A.**
**I-20121 Milano (IT)**

(72) Inventors:
- **Lenti, Daria**
  **Velenza Po, Alessandria (IT)**
- **Marchetti, Roberta**
  **Voghera, Pavia (IT)**
- **Scicchitano, Massimo**
  **Milano (IT)**

(74) Representative: **Sama, Daniele, Dr. et al**
**Sama Patents**
**Via Morgagni, 2**
**20129 Milano (IT)**

(56) References cited:
**EP-A- 0 405 534**
**EP-A- 0 430 266**
**US-A- 3 810 874**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 695 772 B1

Printed by Jouve, 75001 PARIS (FR)

## Description

The present invention relates to a process to avoid the decay effects on the usual building materials and coatings by the use of inks, spray or brush paints, coloured chalks, etc.

The damage caused is relevant especially on the buildings of great artistic interest: besides an aestetic degradation there is generally an irreversible damage.

The methods used to clean surfaces from these graffiti are the following: a posteriori treatments and a priori treatments.

The a posteriori treatments of the treated surfaces essentially involve:

a) a coating thereof with paint;
b) an abrasive treatment;
c) washing attempts with solvents.

In any case the final result of any of such treatments leads to new heterogeneous surfaces and different from the original ones.

In particular it happens that:

a) the treatment by paint, which involves the application of a waterproof film, contravenes one of the main criteria to adopt for the preservation-protection of stone materials, that is, the maintenance thereon of the possibility to "breathe" with the result of possible meanlong term damages;
b) the abrasive treatment results in a real attack of the material and, even if possible and suitable, cannot obviously be carried out for repeated cleanings;
c) solvent cleaning solvent leads to soak the material with the solvent-paint mixture leaving clear and permanent stains.

To these inconveniences the economic cost of these cleaning treatments is obviously to be added.

To obviate these drawbacks, a priori treatments are used by applying filming and not filming substances which hinder or make more easily removable graffiti.

The use of organic polymeric products characterized in having a high number of carbon-hydrogen bonds, such as for instance silicone and acrylic resins has given a partial solution to the problem.

The drawbacks of this treatment are due to the low stability of these compounds to the light and to the air pollution, found also when these compounds are used as protective agents against the air pollution. As regards silicone resins, said low stability is reported in G. Biscontin et al work published in **Atti del Convegno di Studi di Bressanone 24-27/11/1986, pg. 597.**

Moreover the materials known in commerce have a further limitation: also those resulting more effective have not a high durability. In practice only one cleaning of the graffito is sufficient to remove also the protective treatment. This leads to high costs which render unthinkable an application thereof on industrial scale.

These drawbacks have partly been overcome by the use of perfluoropolyethers with perfluoroalkylic terminals when the material porosity is lower than 10%. See for instance **Italian patent No. 1161595.**

For materials having high porosity it is known the use of perfluoropolyethers with functional terminals, capable to form a chemical and/or physical bond with the material to be protected, alone or optionally in admixture with polytetrafluoroethylene, or TFE copolymers, under the form of fine powders from 0.05 to 0.5 micron in amounts from 2 to 30% by weight. See for instance **Italian patent No. 1233420.**

The advantage of the PFPE based protective agents resides in that the underlying stone or coating material has the possibility to permit to evaporate the absorbed water through capillarity.

Tests carried out by the Applicant have however shown that these protective paints cannot be industrially utilized since the graffito is really easily removed for 90% of the treated surface but leaves halos or stains which change the aesthetic aspect of the underlying material and which require therefore an additionl treatment of abrasive type to remove the remaining part.

Therefore the same disadvantages of the later cleaning indicated above occur.

It has been unexpectedly found that it is possible to carry out an a priori treatment on the surface of the materials to be protected against graffiti which has a long durability without leaving neither halos nor stains and without changing the surface of the treated material by using a paint as defined hereafter. The surface treatment according to the present invention is resistant also to 10 cleaning operations wherefore it can be avoided to treat frequently again the surfaces by a new protective treatment. This has clear practical advantages, both economic and industrial.

Object of the present invention are therefore cured (per)fluoropolyether polymers having hydroxylic polyfunctional terminals of general formula:

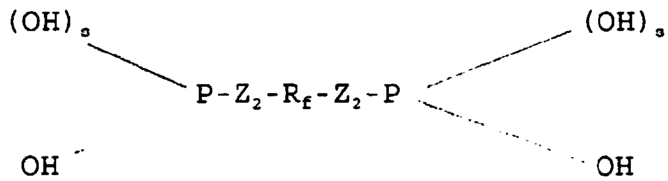

(I)

wherein:

$Z_2$ represents the bifunctional group -O-CO-NH-R-NH-CO-O-, R being an alkylene radical from 1 to 20 carbon atoms, cycloalklylene, alkylene-cyclocalkylene or arylene radical containing from 5 to 30 carbon atoms, the cyclic ring may contain heteroatoms and substituents; $R_f$ represents the $R'_f$-Y' group wherein $R'_f$ is a bifunctional radical derived from (per)fluoropolyethers, generally having number average molecular weight $\overline{M}n$ from 500 to 7000, preferably from 900 to 2500, Y'is a bivalent linking organic radical, Y' preferably is of aliphatic type of formula -$(CH_2-CH_2-O)_n-(R_H)_{x'}$-, wherein n is an integer from 0 to 6, preferably 1 or 2; x' is an integer from 0 to 10, preferably from 1 to 3; wherein $R_H$ is a linking bivalent radical of linear aliphatic type -$(CH_2)_m$- wherein m is an integer from 1 to 20, or (alkylene) cycloaliphatic, (alkylene) aromatic optionally having also heteroatomns on the ring or in chain, the number of carbon atoms of the cycloaliphatic compounds being from 3 to 20, of the aromatic compounds from 5 to 30; the $R_H$ group being capable to be also a mix of the listed types;
s is an integer equal to 1 or 2;
P represents a trivalent or tetravalent radical derived from polyols.

Other examples of Y' are the following:
-$CH_2O$-, -$OH_2$-O-$CH_2$-, -$(CH_2)_n$- (wherein n is an integer from 1 to 3), -$CF_2$-, -$CF_2O$-, -$CH_2$-, -$CONR_7$-, -COO-, -COS-, -CO-, -$CH_2NR_7$-, -$CH_2S$- wherein $R_7$ is an alkyl group containing from 1 to 8 carbon atoms, an aromatic or an alkoxyaromatic group, such as for instance benzyl, preferably the aromatic group contains 6 or 10 carbon atoms and the alkylaromatic group from 7 to 11; the aromatic group can be substituted with alkylic groups (preferably containing from 1 to 3 carbon atoms) or polyethoxylic groups (preferably containing from 1 to 6 ethoxyl units).

Other suitable linking radicals Y' are described as radicals X or Y, in **USP 4,094,911**.

The radical $R'_f$ comprises repeating units of one or more oxyfluoroalkylene units of the type:
-$CF_2CF_2O$- , -$CR_4R_5CF_2CF_2O$-,

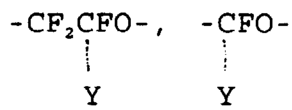

wherein $R_4$ and $R_5$ equal to or different from each other are F, perfluoroalkyl from 1 to 3 carbon atoms, chlorine or hydrogen.
In particular the fluoropolyethers of the type $R'_f$ utilizable according to the present invention can be of the type:

a) -$(C_3F_6O)_{m'}$-, - $(CFXO)_{n'}$- wherein the $(C_3F_6O)$ and $(CFXO)$ units are perfluorooxyalkylenic units statistically distributed along the chain; m' and n' are integers such as to give the above indicated molecular weight and m'/n' is comprised between 5 and 40, when n' is different from 0; X is equal to F or $CF_3$; n' being capable of being also 0:
b)

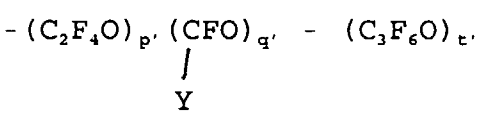

wherein p' and q' are integers such that p'/q' ranges between 5 and 0.3, preferably 2.7-0.5 and such that the molecular weight is that indicated above; t' being an integer with the meaning of m', Y = F or $CF_3$; t' being capable of being 0 and q'/q'+p'+t' lower than or equal to 1/10 and the t'/p' ratio is from 0.2 to 6;
c) -$CR_4R_5$-$CF_2CF_2$-O- wherein $R_4$ and $R_5$ are equal to or different from each other and selected from H, Cl, the

molecular weight being the one indicated above, a fluorine atom of the perfluoromethylene unit can be substituted by H, Cl or perfluoroalkyl.

The fluoropolyethers indicated are obtainable by the processes well known in the art for instance **US patents ù3, 665, 041, 2,242,218, 3,715,378** and **European patent EP 239,123.** The functionalized fluoropolyethers are obtained for instance according to **EP patents 148,482, USP 3,810.874.**

The preferred (per)fluoropolyether diols are for instance

$$HO(CH_2CH_2O)_nCH_2CF_2O\,(CF_2CF_2O)_{p'}\,(CF_2O)_{q'}CF_2CH_2(OCH_2CH_2)_nOH \qquad (A^2),$$

$$HOCH_2CF_2O\,(CF_2CF_2O)_{p'}(CF_2O)_{q'}CF_2CH_2OH \qquad (A^3),$$

wherein p', q' and n have the indicated meanings.

These products are obtained according to known processes for instance ($A^3$) from the corresponding diester according to USP Patent 3,810,874, ($A^3$) by salification of ($A^2$) and reaction with ethylene oxide.

From the functionalized products with hydroxylic end are obtained the fluoropolyethers of the present invention, in particular the fluorinated polymers of formula (I) according to the process indicated hereinafter.

The process to obtain the (per)fluoropolyethers with hydroxylic polyfunctional end is the following:

1) a diisocyanate of general formula $R(NCO)_2$, R having the above indicated meaning, is reacted with a bifunctional perfluoropolyether with hydroxylic end;
2) reaction of the reaction product obtained in 1) with a polyfunctional polyol $P(OH)_{s+2}$ wherein s is an integer equal to 1 or 2.

The reaction scheme is the following:

1)

$$2R(NCO)_2 + HO\text{-}R_f\text{-}OH \rightarrow OCN\text{-}R\text{-}NH\text{-}CO\text{-}O\text{-}R_f\text{-}O\text{-}CO\text{-}NH\text{-}R\text{-}NCO$$

2)

(A)

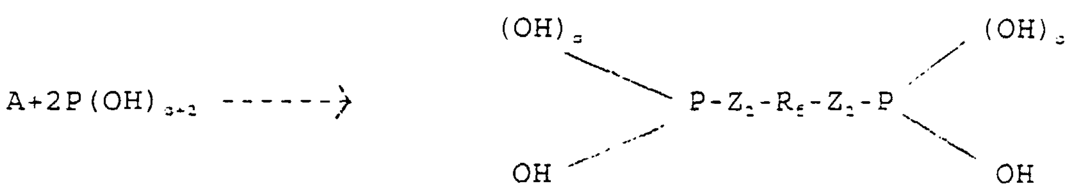

(I)

The products of type A have functionality 2, those of type I a functionality 4 when s is equal to 1, and 6 when s is equal to 2.

The process for preparing these products is indicated for instance in **USP 4,704,420.**

The products of formula (I) are obtained by reacting the diisocyanate and the (per)fluorinated polyether diol in autoclave and reacted at a temperature from 40 to 100°C.

When the reaction is over, the reaction product (A) is added with polyol or a mixture of polyols to confer the high functionality to the macromolecule, the temperature is from 40 to 100°C.

As the diisocyanate and the (per)fluorinated polyether diol are completely immiscible and from their mixing is obtained a non homogeneous lacteous suspension which tends to unmix in an upper part (diisocyanate) and in a lower part (diol), the reaction is carried out in the presence of a solvent. Such solvent allows the presence in the reaction

medium of molecules of fluorinatd diol and of diisocyanate in homogeneous phase.

The intermediate NCO terminated reaction product (A) is soluble and can work itself as solvent for the still unreacted perfluorinated polyether diol.

The used solvent is compatible with the reaction temperature and is inert with respect to the reactants and to the final reaction product.

Examples of suitable solvents are: dimethylformamide, chlorinated solvents such as trielin, tetrachloroethane, or organic solvents containing in the molecule an ester-ether group such as polyoxyethylene monoethyl-ether acetate, polyoxyethylene monobutylether acetate, polyoxybutylene mono-ethyl-ether acetate, polyoxy-butylene monobutylether acetate, polyoxyethylene diacetate, polyoxybutylene-diacetate, cellosolve acetate, ethyleneglycol diacetate, butyleneglycol diacetate, ketones for instance MEK (methylethylketone) , MIBK (methylisobutylketone).

It is preferable to operate in the presence of suited catalysts in order to increase the reaction kinetic.

Examples of such catalysts are: tertiary amines, such as triethylenediamine, N-ethyl-ethylene-imine, tetramethylguanidine, dimethylcyclohexylamine, etc., the organometallic activators such as dibutyltindilaurate (DBTDL), octoate tin, naphthenate cobalt, acetylacetonate vanadium, dimethyl-tin-diethylhexanoate and their blends.

Preferred catalysts are triethylendiamine and dibutyltindilaurate.

Said catalysts are used in catalytic concentrations and generally not higher than 0.1% by weight.

Any diisocyanate of general formula NCO-R-NCO can be used. Examples of diisocyanates are:
2,4-toluenediisocyanate alone or in admixture with the isomer 2,6-toluenediisocyanate, 4,4'diphenyl-methanediisocyanate, 4-4'dicyclohexyl-methanediisocyanate; 1-isocyanate-3-isocyanate-methyl-3, 5, 5-trimethylcyclohexane (or isophorondiisocyanate) ; 2, 2, 4-trimethylhexamethyllene-diisocyanate in admixture with the isomer 2,4,4-trimethylhexamethylene-diisocyanate, ethylidene-di-isocyanate, butylene-diisocyanate, pentamethylene-diisocyanate, hexamethylene-diisocyanate, cyclopentylene-1,3-diisocyanate, cyclohexylene-1,4-diisocyanate, cyclohexylene-1,2-diisocyanate, xylene-diisocyanate, dichloro-hexamethylene-diisocyanate, dicyclo-hexyl-4,4' diisocyanate, 1,2-di(isocyanate-methyl)cyclobutane, 1-methyl-2,4-diisocyanate-cyclohexane, 1-methyl-2,6-diisocyanate cyclohexane ; aliphatic diisocyanates containing ether groups such as 1,3-bis(γ-isocyanatepropoxy)-2,2-dimethylpropane. Among these aliphatic diisocyanates, such as isophoronediisocyanate, are preferred.

Any polyol having trivalent or tetravalent functionality and preferably low molecular weight can be utilized for the synthesis of (I) object of the present invention.

Polyols with molecular weight lower than 400, such as trimethylolpropane, trimethylolethane, glycerol, 1,2,6, hexanetriol and ethoxylated or propoxylated pentaerythrite, are preferred.

Said polyols can be used alone or in admixture with each other.

The paints obtained having high functionality of general formula (I) in solution of their reaction solvent or further diluted with dilution solvents which can be either the same reaction solvents or products compatible with them, such as acetates of general formula $CH_3$-COO-$R_2$, when $R_2$ is a linear or branched alkylic radical containing from 2 to 6 carbon atoms, or still ketones of general formuyla $R_3$-CO-$R_4$, where $R_3$ and $R_4$ are linear or branched alkylic radicals containing from 1 to 5 carbon atoms.

The usual additives such as pigments and fillers can be added to the paint so obtained; these must be inert products, i.e. they must not contain reactive groups with the hydroxylic groups of the product of formula (I).

The pigments and fillers have the purpose to improve the surface characteristics, such as consistency, hardness and moisture resistance, colour stability, etc. of the paint after spreading and drying on the treated surface. The pigments can be selected from the natural, synthetic inorganic and synthetic organic pigments. As example of inorganic pigments can be cited:
metal oxides: titanium dioxide, iron oxides, mixed oxides of Ni, Co, Zn, Ti or Cu, Cr or Fe, Ni, Cr, Mn, cobalt aluminates; organic pigments: derived from anthraquinone, quinacridone, tetrachloroisoindolinone, diketo-perylene, phthalocyanine.

The products of formula (I) utilized for preparing the paints object of the present invention are sufficiently fluorinated to be compatible with fillers such as polytetrafluoroethylene, polyfluoroethylene-propylene.

These fillers can be added in high amounts such as, for instance, up to 50% by weight. The fillers, as well as inert pigments and any other type of additive, are added to the dispersion in very fine form, generally with sizes lower than 100 microns. Other examples of fillers are:
colloidal silica, polyamides having sizes 20-100 μm, glass sphere such as zeolites. Other additives are for instance: thixotropic agents, acrylic, silicone, polyurethane, polyaminic polymeric dispersants or with carboxylic or nonionic functionality; stretching, anticissing, antistatic, antifoam additives; additives to reduce the photooxidation; UV adsorber (for example hydroxybenzophenones and hydroxybenzotriazol derivatives,) HALS (hindered amines, for example tetramethyl-piperidine derivatives,).

The paints object of the present invention are characterized by high water repellence, low surface critical tension and low friction coefficient.

The amount of the products of formula (I) to apply on the surfaces to be protected changes depending on the

material to be treated, in particular on its porosity.

Larger amounts are obviously used for porous materials. Amounts from 10 g to 50 g/$m^2$ of surface to be treated are usually used.

The application of the paints to the surface of the material or manufactured article to be protected can be carried out with any technique usually employed for such purpose: by brush or by a compressed air gun and by a spray method.

The curing of the paints of the present invention is generally carried out at room temperature for a sufficient time to obtain curing. The cure of polyhydroxylated compounds is well known in the art, see for example **European patent application No. 95101145.1**

The polyhydroxylated polymers are crosslinkable for example with polyisocyanates containing isocyanurated rings, or using suitable polyisocyanic prepolymers based on isophorondiisocyanate (IPDI), toluendiisocyanate (TDI), hexamethylendiisocyanate (HMDI), etc. in the presence of metal or aminic catalysts, at room temperature or higher, using a NCO/OH ratio for instance from 1/1 to 1.5/1.

Blocked polyisocyanates obtainable from the polyisocyanates indicated above by reaction, for instance, with phenols or ketoxime can be also used. Other kinds of crosslinking are of peroxidic type by using conventional organic peroxides, for instance, di-ter-butylperoxide, lauroylperoxide, benzoylperoxide.

The following examples are given only to illustrate but not to limit the present invention.

## EXAMPLE 1

Preparation of the product of formula I

74 g (0.074 moles) of Fomblin Z-DOL of formula $A^3$ with number average molecular weight Mn of 1000 (equivalent weight 500), 32.9 g (0.148 moles) of isophoronediisocyanate, 30 g of butyl acetate and 0.056 g of dibutyltindilaurate are charged, under nitrogen atmosphere, into a 500 cc reactor equipped with stirrer, thermometer and falling cooler. It is slowly heated in half an hour at 77°C. The mixture, initially lacteous, at this temperature becomes limpid.

It is heated at 80°C and kept at this temperature for 1 hour. It is cooled at 55°C and 19.90 g (0.148 moles) of trimethylolpropane dissolved at 60°C in 25 g of butylacetate, are loaded. It is slowly heated in half an hour at 80°C and kept at this temperature for 3 hours obtaining a solution having 70% by weight of FLUOROBASE$^{(R)}$ Z (product of formula I).

Preparation of paints

The urethane bicomponent formulation, described in Table 1, based on fluorinated block polymers obtained above was spray applied (nozzle 1.2 mm, 3 atm) on asbestos cement tests, polypropylene loaded cement CEMBONIT$^{(R)}$ by SIL Società Italiana Lastre (density 1.4 kg/$dm^3$, max water absorption 30% by weight) in amounts corresponding to about 100 g/$m^2$.

The film was cured at room temperature for at least 48 hours.

After this time, the tests surfaces were stained with commercial products as follows: solvent acrylic spray paints (Dupli Color) of black, red and blue colour, nitro paints (Color Matic) of red and green colour, solvent fluorescent paints (Dupli Colour Fluo), water acrylic paints (Dupli Color Aqua Lack) of black colour all produced by Vogelsang (Cesano Boscone, Milano).

The graffiti cleanness was then evaluated after 24 hours and 7 days of drying using paper soaked in the following solvents:

- ethanol
- n-methylpyrrolidone/Triton X100 (99,9/0.1)
- mixture of toluene/xylene/MEK/ethyleneglycol/isopropanol (28/13/10/2/47)
- Glassex$^{(R)}$.

The obtained results (Table 2) are the same for the cleanness carried out after 24 hours and 7 days.
In all cases even if the FLUOROBASE$^{(R)}$ coating tends to soften upon contact with the solvent, after its evaporation the original situation is reinstated.

In the tables the meaning isthe following:

| | |
|---|---|
| Yes means: | easy removal of the graffito without removing the FLUOROBASE$^{(R)}$ Z coating |
| yes/abr. means: | removal of the graffito with greater difficulty |
| Off means: | complete removal of the coating |

swell means: removal of the graffito with coating swelling
halo means: partial removal of the graffito with formation of halos

**EXAMPLE 2**

The urethane bicomponent formulation, described in Table 1, utilizing the product obtained in example 1 was spray applied (nozzle 1.2 mm, 3 atm) in amount corresponding to about 100 $g/m^2$ on tests, previously treated with a solvent impregnant Salchi and an intermediate polyester layer Salchi.

The film was cured as in Example 1 at room temperature for at least 48 hours.

After this time, the tests surfaces were stained with commercial products as follows: solvent acrylic spray paints (Dupli Color) of black, red and blue colour, nitro paints (Color Matic) of red and green colour, solvent fluorescent paints (Dupli Colour Fluo), water acrylic paints (Dupli Color Aqua Lack) of black colour all produced by Vogelsang (Cesano Boscone, Milano).

The graffiti cleanness was then evaluated after 24 hours and 7 days of drying using paper soaked in the following solvents:

- ethanol (EtOH)
- n-methylpyrrolidone/Triton X100 (99.9/0.1) (n-MePy)
- mixture of toluene/xilene/MEK/ethyleneglycol/isopropanol (28/13/10/2/47) (mix)
- Glassex$^{(R)}$.

The obtained results are the same for the cleanness carried out after 24 hours and 7 days and correspond to those obtained in example 1 (see Table 2).

**EXAMPLE 3**

The urethane bicomponent utilizing the product obtained in example 1, described in Table 1, was spray applied (nozzle 1.2 mm, 3 atm) on asbestos cement tests in amounts corresponding to about 150 $g/m^2$.

The film was cured as in Example 1 at room temperature for 48 hours.

After this time, the tests surfaces were stained with commercial products as follows: indelible Stabilo marking pens of different colours with a fine tip, black Staedtler marking pens with a thick tip and rechargeable Marker marking pens.

The graffiti cleanness was then evaluated after 24 hours and 7 days of drying using paper soaked in the following solvents:

- ethanol
- n-methylpyrrolidone/Triton X100 (99.9/0.1).

The obtained results (Table 3) are the same for the cleanness carried out after 24 hours and 7 days.

**EXAMPLE 4**

The urethane bicomponent formulation based on fluorinated block polymers of general formula I obtained according to example 1, described in Table 4, was spray applied (nozzle 1.2 mm, 3 atm) on asbestos cement tests, polypropylene loaded cement CEMBONIT$^{(R)}$ of the company SIL Società Italiana Lastre (density 1.4 $Kg/dm^3$, max water absorption 30% by weight) in amount corresponding to about 100 $g/m^2$.

The film was cured as in Example 1 at room temperature for at least 48 hours.

This time elapsed, the tests surfaces were stained with commercial products as follows: solvent acrylic spray paints (Dupli Color) of yellow, red and white colour, nitro paints (Color Matic) of red colour, solvent fluorescent paints (Dupli Colour Fluo), water acrylic paints (Dupli Color Aqua Lack) of black colour, metallized paints (Dupli Color Eloxal), all produced by Vogelsang (Cesano Boscone, Milano).

The graffiti cleanness was then evaluated after 24 hours and 7 days of drying using paper soaked in the following solvents:

- ethanol
- n-methylpyrrolidone/Triton X100 (99.9/0.1)
- mixture of toluene/xilene/MEK/ethyleneglycol/isopropanol (28/13/10/2/47)

The obtained results (Table 5) are the same for the cleanness carried out after 24 hours and 7 days.
In any case even if the FLUOROBASE(R) Z coating tends to soften upon contact with the solvent, after its evaporation the original situation is reinstated.

**EXAMPLE 5**

The tests of example 1 (bright formulation FLUOROBASE(R) Z) and of example 4 (glazed formulation FLUOROBASE(R) Z) stained with solvent acrylic and nitro paints, were put in stove at 40°C for 3 days to simulate an accelerated aging and then cleaned with paper soaked in ethanol.
All the samples were cleaned with the same easiness of the tests not aged in stove.

**EXAMPLE 6**

The tests of example 1 (bright formulation FLUOROBASE(R) Z) and of example 4 (glazed formulation FLUOROBASE(R) Z) stained with solvent acrylic and nitro paints, were submitted to subsequent cycles of staining/ cleanness with ethanol to evaluate the removal resistance of the fluorinated film. The glazed formulation also after 10 cycles of dirtiness/ cleanness results undamaged. The bright formulation after 5 cycles results undamaged.

**EXAMPLE 7** (comparative)

A commercial antigraffiti paint Silko 31.70 (Chembau) was brush applied on asbestos cement tests, polypropylene loaded cement CEMBONIT(R) by SIL Società Italiana Lastre (density 1.4 $Kg/dm^3$, max water absorption 30% by weight) in amount corresponding to about 100 $g/m^2$.
The film was cured as in Example 1 at room temperature for at least 48 hours.
After this time, the tests surfaces were stained with commercial products as follows: solvent acrylic spray paints (Dupli Color) of black, red and blue colour, nitro paints (Color Matic) of red and green colour, solvent fluorescent paints (Dupli Colour Fluo), water acrylic paints (Dupli Color Aqua Lack) of black colour all produced by Vogelsang (Cesano Boscone, Milano).
The graffiti cleanness was then evaluated after 24 hours and 7 days of drying using paper soaked in the following solvents:

- ethanol
- n-methylpyrrolidone/Triton X100 (99.9/0.1)
- mixture of toluene/xilene/MEK/ethyleneglycol/isopropanol (28/13/10/2/47).

The obtained results (Table 6) are the same for the cleanness carried out after 24 hours and 7 days.

**EXAMPLE 8** (comparative)

A commercial antigraffiti paint Silko 31.70 (Chembau) was brush applied on asbestos cement tests, polypropylene loaded cement CEMBONIT(R) by SIL Società Italiana Lastre (density 1.4 $Kg/dm^3$, max water absorption 30% by weight) in amount corresponding to about 100 $g/m^2$.
The film was cured as in Example 1 at room temperature for at least 48 hours.
This time elapsed, the tests surfaces were stained with commercial products as follows: indelible Stabilo marking pens of different colours with a fine tip, black Staedtler marking pens with a thick tip and rechargeable Marker marking pens.
The graffiti cleanness was then evaluated after 24 hours and 7 days of drying using paper soaked in ethanol.
The obtained results (Table 7) are the same for the cleanness carried out after 24 hours and 7 days.
When it is necessary to leave for a longer time the solvent in contact with the coating to remove the graffito, also the Silko coating is removed.

**EXAMPLE 9**

The white pigmented urethane bicomponent formulation based on fluorinated block polymers of general formula I, obtained in example 1, described in Table 8, was spray applied (nozzle 1.2 mm, 3 atm) on phosphatated aluminium tests in amounts corresponding to about 40 μm of thickness.
The film was cured as in Example 1 at room temperature for 48 hours.
After this time, the tests surfaces were stained with commercial products as follows: solvent acrylic spray

paints (Dupli Color) of black and red colour, nitro paints (Color Matic) of red and green colour, solvent fluorescent paints (Dupli Colour Fluo), water acrylic paints (Dupli Color Aqua Lack) of black colour, metallized paint (Dupli Color Eloxal) all produced by Vogelsang (Cesano Boscone, Milano).

The graffiti cleanness was then evaluated after 24 hours and 7 days of drying using paper soaked in the following solvents:

- ethanol
- n-methylpyrrolidone/Triton X100 (99.9/0.1).
- mixture of toluene/xilene/MEK/ethyleneglycol/isopropanol (28/13/10/2/47).

The obtained results (Table 9) are the same for the cleanness carried out after 24 hours and 7 days.

In any case even if the FLUOROBASE(R) Z coating tends to soften upon contact with the solvent, after its evaporation the original situation is reinstated.

**EXAMPLE 10** (comparative)

Asbestos cement tests, polypropylene loaded cement CEM-BONIT(R) by SIL Società Italiana Lastre (density 1.4 kg/dm$^3$, max water absorption 30% by weight) were treated with Z DOL solutions ($A^3$ of example 1) in ethanol in amount corresponding to about 10 and 25 g/m$^2$.

After 48 hours of drying at room temperature, the test surfaces were stained with commercial products as follows: solvent acrylic spray paints (Dupli Color) of black and red colour, nitro paints (Color Matic) of red and green colour, water acrylic paints (Dupli Color Aqua Lack) of black colour, all produced by Vogelsang (Cesano Boscone, Milano).

The graffiti cleanness was then evaluated after 24 hours and 7 days of drying using paper soaked in ethanol. The partial removal of the spray paints occurred with formation of halos and paint stains in various parts of the surface.

**EXAMPLE 11** (comparative)

Example 10 was repeated but applying 100 g/m$^2$.

Results similar to those of example 10 are obtained.

TABLE 1

| | g | dry component g |
|---|---|---|
| FLUOROBASE(R) Z (70% in butylacetate) | 54 | 37.8 |
| PMA/butyl acetate (30-70% by weight | 40 | |
| Tinuvin 292/Tinuvin 1130 (10% MIBK) | 6 | 0.6 |
| W3 (Ichemco) (30% by weight in PMA/ButAc 30/70) | 77.5 | 23.3 |
| | 177.5 | 61.7 |

total dry % = 35% by weight
PMA = propylene glycolmethylether acetate
ButAc = butylacetate
Tinuvin 292 and 1130 are UV stabilizers and HALS
W3: a crosslinking agent biuret (hexamethylendiisocyanate derivative)

TABLE 2

| | EtOH | Glassex | n-MePy | Mix |
|---|---|---|---|---|
| Acrylic solvent (black/red/blue) | yes | yes | yes/abr. | yes |
| Nitro (red/green) | yes | yes/abr. | yes | yes |
| Acrylic water (black) | yes | yes | yes | yes |
| Fluorescent | yes | yes | yes | yes |

Yes = easy removal of the graffito without removing the FLUOROBASE(R) Z coating
yes/abr.= removal of the graffito with greater difficulty.

TABLE 3

| | EtOH | n-MePy |
|---|---|---|
| Stabilo marking pens | yes | yes |
| Staetdler marking pens | yes | yes |
| Marker marking pens Yes: (see Table 2). | yes | yes |

TABLE 4

| | g | dry component g |
|---|---|---|
| FLUOROBASE(R) Z (70% in butylacetate) | 50.0 | 35.0 |
| Silica(R) TS 100 (filler having average diameter 3-5 µm) | 3.5 | 3.5 |
| DBTDL (5% by weight in PMA) | 4.3 | 0.21 |
| PMA/ButAc 30/70 | 42.1 | |
| BYK(R) 161 (dispersing agent for the filler) | 0.05 | 0.05 |
| BYK(R) 080 (antifoam agent) | 0.1 | 0.1 |
| W3 (Ichemco) (55% in PMA/ButAc) | 40.0 | 22.0 |
| | 140.0 | 60.86 |
| total dry % = 43.4% by weight | | |

TABLE 5

| | EtOH | n-MePy | Mix |
|---|---|---|---|
| Acrylic solvent (yellow/red/white) | yes | yes | yes |
| Nitro (red) | yes | yes | yes |
| Acrylic water (black) | yes | yes | yes |
| Fluorescent | yes | yes | yes |
| Metallized | yes/abr. | yes | yes/abr. |

TABLE 6

| | EtOH | n-MePy | Mix |
|---|---|---|---|
| Acrylic solvent (yellow) | off | off | off |
| Nitro (red) | off | off | off |
| Acrylic water (black) | yes | yes | yes |
| Fluorescent | yes | swell | swell |
| Metallized | off | off | - |

TABLE 7

| | EtOH |
|---|---|
| Stabilo marking pens | halo |
| Staetdler marking pens | halo |
| Marker marking pens | halo |
| halo = partial removal of the graffito with formation of halos | |

TABLE 8

| | g | dry component g |
|---|---|---|
| FLUOROBASE(R) Z (70% in butylacetate) | 66.4 | 46.5 |
| PMA/butyl acetate (30/70) | 53.4 | |
| Tinuvin 292/Tinuvin 1130 (10% MIBK) | 4.6 | 0.46 |
| DBTDL (5% in PMA) | 1.4 | 0.07 |
| $TiO_{2(R)}$ R960 Dupont (pigment having average diameter 0.2 μm) | 23.2 | 23.2 |
| W3 (Ichemco) | 26.0 | 26 |
| | 175.0 | 96.2 |
| total dry % = 55% by weight | | |

TABLE 9

| | EtOH | n-MePy | Mix |
|---|---|---|---|
| Acrylic solvent (black/red) | yes | yes | yes |
| Nitro (red/green) | yes | yes | yes |
| Acrylic water (black) | yes | yes | yes |
| Fluorescent | yes | yes | yes |
| Metallized | yes | yes | yes |

**Claims**

1. Use of (per)fluoropolyether cured polymers as antigraffiti for the preventive treatment of building materials and coatings wherein (per)fluoropolyether polymers before curing have hydroxylic polyfunctional ends of general formula:

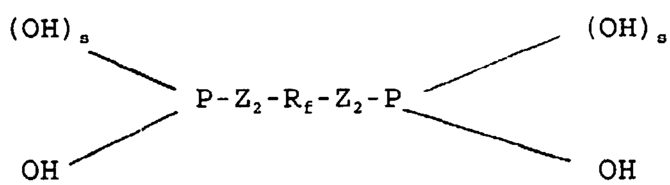

(I)

wherein:

$Z_2$ represents the bifunctional group -O-CO-NH-R-NH-CO-O-R being an alkylenic radical from 1 to 20 carbon atoms, cycloalkylenic, alkylenic-cycloalkylenic or arylenic radical containing from 5 to 30 carbon atoms, the cyclic ring being capable of containing heteroatoms and substituents;
$R_f$ represents the $R'_f$-Y' group wherein $R'_f$ is a bifunctional radical derived from (per)fluoropolyethers;
Y' is a bivalent linking organic radical
s is an integer equal to 1 or 2;
P represents a trivalent or tetravalent radical derived from polyols.

2. Use of (per)fluoropolyether cured polymers as antigraffiti according to claim 1, wherein $R'_f$ comprises repeating units of one or more oxyfluoroalkylenic units of the type:
$-CF_2CF_2O-$ , $-CR_4R_5CF_2CF_2O-$,

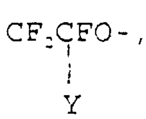 , 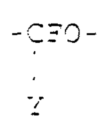

wherein $R_4$ and $R_5$ equal to or different from each other are F, perfluoroalkyl from 1 to 3 carbon atoms, chlorine or hydrogen, Y = F or $CF_3$.

**3.** Use of (per)fluoropolyether cured polymers as antigraffiti according to claims 1 and 2, wherein $R'_f$ has molecular weight from 500 to 7000.

**4.** Use of (per)fluoropolyether cured polymers as antigraffiti according to claims from 1 to 3, wherein Y' is of aliphatic type of formula $(CH_2\text{-}CH_2\text{-}O)_n\text{-}(R_H)_{x'}$, wherein n is an integer from 0 to 6; x' is an integer from 0 to 10; $R_H$ is a linking bivalent radical of linear aliphatic type $-(CH_2)_m-$ wherein m is an integer from 1 to 20, or (alkylene) cycloaliphatic, (alkylene)aromatic optionally having also heteroatoms on the ring or in chain, the number of carbon atoms of the cycloaliphatic compounds being from 3 to 20, for the aromatic compounds from 5 to 30; the $R_H$ group being capable to be also a mix of the listed types.

**5.** Use of (per)fluoropolyether cured polymers as antigraffiti according to claims from 1 to 4, wherein the fluoropolyethers $R'_f$ are selected from the following classes:

a) $-(C_3F_6O)_{m'}-$, $-(CFXO)_{n'}-$ wherein the $(C_3F_6O)$ and $(CFXO)$ units are perfluorooxyalkylenic units statistically distributed along the chain; m' and n' are integers such as to give the above indicated molecular weight, and m'/n' is comprised between 5 and 40, when n' is different from 0; X is equal to F or $CF_3$; n' being capable to be also 0;
b)

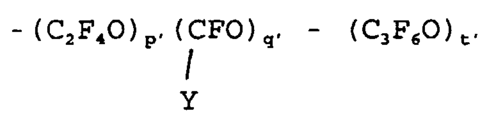

wherein p' and q' are integers such that p'/q' ranges between 5 and 0.3, and such that the the molecular weight is that indicated above; t' being an integer with the meaning of m', Y = F or $CF_3$; t' being capable to be 0 and q'/q'+p'+t' lower than or equal to 1/10 and the t'/p' ratio is from 0.2 to 6;
c) $-CR_4R_5\text{-}CF_2CF_2\text{-}O$ wherein $R_4$ and $R_5$ are equal to or different from each other and selected from H, Cl, the molecular weight being the one indicated above, a fluorine atom of the perfluoromethylene unit can be substituted by H, Cl or perfluoroalkyl.

**6.** Use of (per)fluoropolyether cured polymers as antigraffiti according to claims from 1 to 5, wherein curing is carried out at room temperature for the time sufficient to achieve it.

## Patentansprüche

**1.** Verwendung von ausgehärteten (Per)fluorpolyether-Polymeren als Antigraffiti zur Schutzbehandlung von Baumaterialien und Beschichtungen, wobei das (Per)fluorpolyether-Polymere vor dem Aushärten polyfunktionelle Hydroxylgruppenenden der allgemeinen Formel:

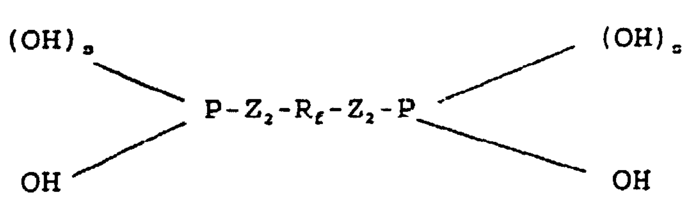

(I)

aufweist, worin:

$Z_2$ die bifunktionelle Gruppe -O-CO-NH-R-NH-CO-O darstellt, wobei R ein Alkylenradikal mit 1 bis 20 Kohlenstoffatomen, ein Cycloalkylen-, Alkylen-Cycloalkylen- oder Arylenradikal ist, das 5 bis 30 Kohlenstoffatome aufweist, wobei der zyklische Ring Heteroatome und Substituenten enthalten kann;
$R_f$ die Gruppe $R'_f$-Y' darstellt, worin $R'_f$ ein bifunktionelles Radikal ist, das von (Per)fluorpolyethern abgeleitet ist;
Y' ein bivalentes organisches Brückenradikal ist;
s eine ganze Zahl ist, die 1 oder 2 entspricht;
P ein dreiwertiges oder vierwertiges Radikal darstellt, das von Polyolen abgeleitet ist.

**2.** Verwendung der ausgehärteten (Per)fluorpolyether-Polymere als Antigraffiti nach Anspruch 1, wobei $R'_f$ sich wiederholende Einheiten einer oder mehrerer Oxyfluoralkyleneinheiten des Typs
$-CF_2CF_2O-$ , $-CR_4R_5CF_2O-$,

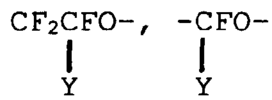

umfaßt, worin $R_4$ und $R_5$ gleich oder verschieden voneinander F, Perfluoralkyl mit 1 bis 3 Kohlenstoffatomen, Chlor oder Wasserstoff sind und Y = F oder $CF_3$ ist.

**3.** Verwendung von ausgehärteten (Per)fluorpolyether-Polymeren als Antigraffiti nach Anspruch 1 und 2, wobei $R'_f$ ein Molekulargewicht von 500 bis 7000 aufweist.

**4.** Verwendung von ausgehärteten (Per)fluorpolyether-Polymeren als Antigraffiti nach den Ansprüchen 1 bis 3, wobei Y' vom aliphatischen Typ der Formel $(CH_2\text{-}CH_2\text{-}O)_n\text{-}(R_H)_{x'}$ ist, worin n eine ganze Zahl von 0 bis 6 ist; x' eine ganze Zahl von 0 bis 10 ist; $R_H$ ein zweiwertiges Brückenradikal vom linearen aliphatischen Typ $-(CH_2)_{m'}$ worin m eine ganze Zahl von 1 bis 20 ist, oder vom (alkylen) cycloaliphatischen oder (alkylen)aromatischen Typ ist, gegebenenfalls ebenfalls mit Heteroatomen im Ring oder in der Kette, wobei die Anzahl der Kohlenstoffatome der cycloaliphatischen Verbindungen 3 bis 20 und der aromatischen Verbindungen 5 bis 30 beträgt, wobei die $R_H$- Gruppe auch ein Gemisch der angegebenen Typen sein kann.

**5.** Verwendung von ausgehärteten (Per)fluorpolyether-Polymeren als Antigraffiti nach den Ansprüchen 1 bis 4, wobei die Fluorpolyether $R'_f$ aus folgenden Klassen ausgewählt werden:

a) $-(C_FF_6O)_{m'}-$, $-(CFXO)_{n'}-$, worin die $(C_3F_6O)$- und (CFXO)-Einheiten Perfluoroxyalkyleneinheiten sind, die entlang der Kette statistisch verteilt sind; m' und n' ganze Zahlen sind, so daß sich das oben angegebene Molekulargewicht ergibt, und m'/n' zwischen 5 und 40 beträgt, wenn n' nicht 0 ist; X F oder $CF_3$ ist; n' auch sein 0 sein kann;
b)

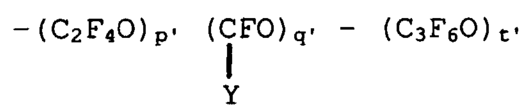

worin p' und q' ganze Zahlen sind, derart, daß p'/q' zwischen 5 und 0,3 beträgt und derart, daß das Molekulargewicht so ist, wie oben angegeben; t' eine ganze Zahl mit der Bedeutung von m' ist, Y = F oder $CF_3$ ist; t' 0 sein kann und q'/q'+p'+t' kleiner oder gleich 1/10 ist und das t'/p'-Verhältnis 0,2 bis 6 beträgt;
c) $-CR_4R_5\text{-}CF_2CF_2\text{-}O$, worin $R_4$ und $R_5$ gleich oder verschieden voneinander sind und ausgewählt werden aus H, Cl, wobei das Molekulargewicht das oben angegebene ist und ein Fluoratom der Perfluormethyleneinheit durch H, Cl oder Perfluoralkyl substituiert sein kann.

**6.** Verwendung ausgehärteter (Per)fluorpolyether-Polymere als Antigraffiti nach den Ansprüchen 1 bis 5, wobei das Aushärten bei Raumtemperatur für einen ausreichend langen Zeitraum, um es zu erzielen, durchgeführt wird.

**Revendications**

1. Utilisation de polymères durcis de (per)fluoropolyéthers comme agents anti-graffitis pour le traitement préventif de matériaux du bâtiment et de produits de revêtement du bâtiment dans lesquels des polymères de (per)fluoropolyéthers renferment avant durcissement des extrémités terminales polyfonctionnels hydroxyles de formule générale:

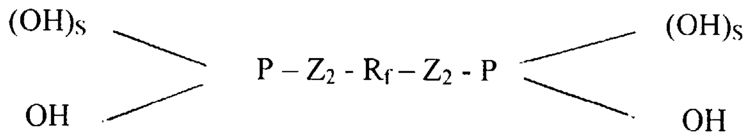

dans laquelle:

$Z_2$ représente le groupe bifonctionnel - O - CO - NH - R - NH - CO -O- ;
R étant un radical alkylène renfermant de 1 à 10 atomes de carbone, cycloalkylène, alkylène-cycloalkylène ou arylène contenant de 5 à 30 atomes de carbone, le noyau cyclique étant susceptible de contenir des hétéroatomes et des substituants;
$R_f$ représente le groupe $R'_f$-Y' dans lequel $R'_f$ est un radical bifonctionnel dérivé des (per)fluoropolyéthers,
Y' est un radical organique de liaison bivalent,
s est un entier égal à 1 ou 2;
P représente un radical trivalent ou tétravalent dérivé des polyols.

2. Utilisation des polymères durcis de (per)fluoropolyéthers comme agents anti-graffitis selon la revendication 1, dans laquelle $R'_f$ comprend des motifs répétitifs de un ou plusieurs motifs oxyfluoroalkylène du type:
$-CCF_2CF_2O-$ , $-CR_4R_5CF_2CF_2O-$,

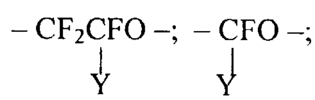

dans lesquels $R_4$ et $R_5$, identiques ou différents l'un de l'autre, sont F, un radical perfluoroalkyle renfermant de 1 à 3 atomes de carbone, du chlore ou de l'hydrogène, Y étant F ou $CF_3$.

3. Utilisation des polymères durcis de (per)fluoropolyéthers comme agents anti-graffitis selon la revendication 1 ou la revendication 2, dans laquelle $R'_f$ présente un poids moléculaire de 500 à 7000.

4. Utilisation des polymères durcis de (per)fluoropolyéthers comme agents anti-graffitis selon les revendications 1 à 3, dans lesquels Y' est du type aliphatique de formule $(CH_2-CH_2-O)_n-(R_H)_{x'}$, dans laquelle n est un entier de 0 à 6; x' est un entier de 0 à 10, $R_H$ est un radical de liaison bivalent du type aliphatique linéaire en $-(CH_2)_m-$ dans lequel m est un entier de 1 à 20, ou un radical alkylène cycloaliphatique, alkylène aromatique renfermant, éventuellement, également des hétéroatomes sur le noyau ou la chaîne, le nombre d'atomes de carbone du dérivé cycloaliphatique étant de 3 à 20, et celui des dérivés aromatiques étant de 5 à 30, le groupe $R_H$ étant susceptible d'être aussi un mélange des types énumérés.

5. Utilisation des polymères durcis de (per)fluoropolyéthers comme agents anti-graffitis selon les revendications 1 à 4, dans laquelle les fluoropolyéthers $R'_f$ sont choisis parmi les classes suivantes:

a) $-(C_3F_6O)_{m'}-$, $-(CFXO)_{n'}-$
dans lesquelles les motifs -- $(C_3F_6O)$ et - (CFXO) sont des motifs perfluorooxyalkylène distribués statistiquement le long de la chaîne; m' et n' sont des entiers propres à donner le poids moléculaire indiqué ci-dessus, et m'/n' est compris entre 5 et 40, lorsque n' est différent de 0: X est égal à F ou $CF_3$, n' étant susceptible d'être également 0;

b)

$$- (C_3F_6O)_{p'} \underset{\substack{| \\ Y}}{(CFO)_{q'}} - (C_3F_6O)_{t'}$$

dans laquelle p' et q' sont des entiers tels que p'/q' sont compris entre 5 et 0,3, et tels que le poids moléculaire est celui indiqué ci-dessus; t' étant un entier avec la signification de m', Y étant F ou $CF_3$; t' étant susceptible d'être 0, le rapport q'/q'+p'+t' étant inférieur ou égal à 1/10 et le rapport t'/p' étant de 0,2 à 6;

c) $-CR_4R_5-CF_2CF_2-O$

dans laquelle $R_4$ et $R_5$ sont identiques ou différents l'un de l'autre et sont choisis parmi H, Cl, le poids moléculaire étant celui indiqué ci-dessus, un atome de fluor du motif perfluorométhylène pouvant être substitué par H, Cl ou un radical perfluoroalkyle.

**6.** Utilisation des polymères durcis de (per)fluoropolyéthers comme agents anti-graffitis selon les revendications 1 à 5, dans laquelle le durcissement est mis en oeuvre à la température ambiante pendant le temps suffisant pour qu'il se produise.